(19) Europäisches Patentamt / European Patent Office / Office européen des brevets

(11) **EP 4 338 597 A1**

(12) **EUROPEAN PATENT APPLICATION**
published in accordance with Art. 153(4) EPC

(43) Date of publication:
**20.03.2024 Bulletin 2024/12**

(21) Application number: **22807412.6**

(22) Date of filing: **06.05.2022**

(51) International Patent Classification (IPC):
**A23L 7/113** *(2016.01)*

(52) Cooperative Patent Classification (CPC):
**A23L 7/113**

(86) International application number:
**PCT/JP2022/019603**

(87) International publication number:
**WO 2022/239710 (17.11.2022 Gazette 2022/46)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **13.05.2021 JP 2021081884**

(71) Applicant: **Sanyo Foods Co., Ltd.**
**Minato-ku, Tokyo 107-0052 (JP)**

(72) Inventor: **NAGAYAMA, Yoshiaki**
**Tokyo 107-0052 (JP)**

(74) Representative: **Wallinger Ricker Schlotter
Tostmann
Patent- und Rechtsanwälte Partnerschaft mbB
Zweibrückenstraße 5-7
80331 München (DE)**

(54) **METHOD FOR MANUFACTURING INSTANT FRIED NOODLES AND INSTANT FRIED NOODLES**

(57) Provided is a method for manufacturing instant fried noodles having a high degree of gelatinization and having a good taste and texture, the method comprising frying raw noodle strings in oil without steaming, and drying the noodle strings. This method for manufacturing instant fried noodles comprises: preparing a dough by kneading a noodle raw material containing a main raw material, water, and at least one calcium-containing material selected from the group consisting of baked calcium and calcium hydroxide; cutting out raw noodle strings from the dough; and frying the raw noodle strings in oil without steaming the raw noodle strings, and drying the noodle strings.

FIG. 1

EP 4 338 597 A1

**Description**

TECHNICAL FIELD

The present disclosure relates to a method for the production of instant fried noodles, and instant fried noodles.

BACKGROUND ART

In recent years, consumers have demanded authentic instant noodles. For example, instant ramen noodles are desired to not only be convenient during storage and cooking, but also to provide a more authentic texture and appearance when eaten. Furthermore, in order to address environmental issues such as the Sustainable Development Goals (SDGs), companies are continuing to make efforts to further reduce energy consumption in the instant noodle production process.

Instant noodles are generally classified into deep-fried noodles (fried noodles) and non-deep-fried noodles (non-fried noodles). The production method for instant noodles generally includes kneading wheat flour, which is the main raw material, and auxiliary ingredients in a mixer to obtain a dough, producing noodle strands from the dough, steaming the noodle strands, and drying the steamed noodle strands. Deep-fried noodles are obtained by drying noodle strands in heated oil. Non-deep-fried noodles can be obtained by hot air drying, microwave drying, freeze drying, or cold drying the noodle strands.

Methods of deep-frying and drying noodle strands without steaming them, i.e., in a raw noodle strand state, are known.

Patent Literature 1 (JP2018-121629A) describes "A method for the production of deep-fried instant noodles, comprising adding water to raw materials including wheat flour, starch, and a polysaccharide thickener, kneading to obtain a noodle dough, cutting raw noodle strands, and deep-frying the raw noodle strands in oil without performing gelatinization."

Patent Literature 2 (JP2020-202771A) describes "A method for the production of deep-fried instant noodles, comprising adding water to a main raw material, kneading to obtain a noodle dough, cutting raw noodle strands, attaching water to the raw noodle strands without gelatinizing the raw noodle strands, performing an oil shower treatment, and then immersing in oil and deep-frying."

[CITATION LIST]

[PATENT LITERATURE]

> [PTL 1] JP2018-121629A
> [PTL 2] JP2020-202771A

SUMMARY OF INVENTION

[TECHNICAL PROBLEM]

In the methods described in Patent Literature 1 and 2, raw noodle strands are dried in the deep-frying process without gelatinization. Thus, deep-fried instant noodles can be produced with low energy consumption without the need for a steamer, which is normally used to produce instant noodles.

However, when deep-frying and drying raw noodle strands without gelatinization, i.e., without steaming, by these methods, the degree of gelatinization of the wheat flour, which is the main raw material of deep-fried instant noodles, may be insufficient, and the taste and texture may not meet the desired standards. By adding starch as one of the main raw materials, it is possible to increase the overall degree of gelatinization of the deep-fried noodles, but the insufficient degree of gelatinization of the wheat flour significantly impacts the taste and texture of the deep-fried instant noodles.

In the oil shower treatment described in Patent Literature 2, the oil is likely to deteriorate because the oil in the form of droplets is constantly in contact with air. Thus, degraded oil may remain in the deep-fried instant noodles and have an adverse effect on flavor, and it is also difficult to reduce the amount of oil used in the oil shower treatment.

An object of the present disclosure is to provide a method for the production of instant fried noodles comprising deep-frying and drying raw noodle strands without steaming, wherein the instant fried noodles have a high degree of gelatinization and an excellent taste and texture.

[SOLUTION TO PROBLEM]

The present inventor has discovered that as compared to instant noodles made by deep-frying and drying noodle strands gelatinized by steam, instant noodles made by deep-frying and drying raw noodle strands without steaming have a powdery and undercooked taste and texture. The present inventor has further discovered that as compared to instant noodles made by deep-frying and drying raw noodle strands without steaming, in instant noodles made by deep-frying and drying noodle strands that have been gelatinized by steaming, the swelling of the noodle strands during deep-frying and drying is further suppressed and the oil content thereof is also lower. From these findings, the present inventor believes that when deep-frying and drying raw noodle strands without steaming, it is important to suppress swelling of the noodle strands during deep-frying and drying to improve the taste and texture thereof.

As a result of rigorous investigation, the present inventor has discovered that by using at least one calcium-containing material selected from the group consisting of calcined calcium and calcium hydroxide as one of the noodle raw materials, even without steaming raw noodle strands, it is possible to effectively utilize the water contained in the raw noodle strands to increase the degree of gelatinization of the instant fried noodles and to suppress swelling of the noodle strands. Furthermore, it was also discovered that as a result of suppressing swelling of the noodle strands, the oil content of the instant fried noodles could be reduced, which further improved the taste.

The present invention encompasses the following aspects.

[Aspect 1]

A method for the production of instant fried noodles, comprising:

kneading a noodle raw material containing a main raw material, at least one calcium-containing material selected from the group consisting of calcined calcium and calcium hydroxide, and water to obtain a dough,
cutting raw noodle strands from the dough, and
deep-frying and drying the raw noodle strands without steaming the raw noodle strands.

[Aspect 2]

The method according to Aspect 1, wherein a content of the calcium-containing material in the noodle raw material is 0.05 parts by mass to 0.5 parts by mass based on 100 parts by mass of the main raw material.

[Aspect 3]

The method according to Aspect 1 or 2, wherein the deep-frying and drying is performed at 140°C or higher.

[Aspect 4]

The method according to any one of Aspects 1 to 3, wherein the time at which the deep-frying and drying is performed below 140°C is 10 seconds or less.

[Aspect 5]

The method according to any one of Aspects 1 to 4, further comprising attaching water to the raw noodle strands before the deep-frying and drying.

[Aspect 6]

An instant fried noodle, having a degree of gelatinization of 70% to 86%, an oil content of 18 mass% to 28 mass%, and containing at least one calcium-containing material selected from the group consisting of calcined calcium and calcium hydroxide.

[Aspect 7]

The instant fried noodle according to Aspect 6, having a surface arithmetic mean roughness Sa of 2 $\mu$m to 5.3 $\mu$m.

[Aspect 8]

The instant fried noodle according to Aspect 6 or 7, wherein a content of the calcium-containing material is 0.057 mass% to 0.57 mass%.

[ADVANTAGEOUS EFFECTS OF INVENTION]

According to the present invention, there is provided a method in which instant fried noodles having a high degree of gelatinization and an excellent taste and texture can be produced when raw noodle strands are deep-fried and dried without steaming.

The above descriptions shall not be deemed to disclose all embodiments of the invention and all advantages relating to the invention.

BRIEF DESCRIPTION OF DRAWINGS

FIG. 1 is a microscope image of the surface of the instant fried noodles of Example 1.
FIG. 2 is a microscope image of the surface of the instant fried noodles of Comparative Example 1.

DESCRIPTION OF EMBODIMENTS

The present invention will be described in more detail below in order to illustrate typical embodiments of the present invention, but the present invention is not limited to these embodiments. In the following description, "parts" and "%" represent amounts and ratios based on mass unless otherwise specified.

As used herein, "noodles" means a food which comprises a powder raw material such as wheat flour and starch, as the main ingredient, which is processed into a linear shape, and which can be eaten when cooked by boiling, simmering, stir-frying, hot water immersion, or heating in a microwave oven with or without water immersion. Examples of noodles include udon noodles, *kishimen* noodles, Chinese noodles, soba noodles, pasta, etc. Examples of the state of noodles before cooking include raw noodles, half-dried noodles, dried noodles, steamed noodles, boiled noodles, frozen noodles, and instant noodles.

As used herein, "instant fried noodles" means noodles that have been dried by deep-frying and drying until the moisture content in the noodles is about 1 mass% to about 10 mass%, and which are cooked by boiling in boiling water, adding boiling water thereto at the time of consumption, or adding water and heating in a microwave.

As used herein, "cutting strength of instant fried noodles" means a cutting strength ($mN/mm^2$) per $mm^2$ of the cross-sectional area of the noodle strands, measured 1 minute after completion of 3 minutes of hot water rehydration according to the procedure described in the Examples.

As used herein, "cross-sectional area of the noodle strands" means the area of a cross-sectional shape perpendicular to the longitudinal direction of the noodle strands.

[Method for Production of Instant Fried Noodles]

The method for the production of instant fried noodles according to an embodiment comprises kneading a noodle raw material containing a main raw material, at least one calcium-containing material selected from the group consisting of calcined calcium and calcium hydroxide, and water to obtain a dough, cutting raw noodle strands from the dough, and deep-frying and drying the raw noodle strands without steaming the raw noodle strands. In the present embodiment, aside from the use of the calcium-containing material described above as one of the noodle raw materials, processes conventionally known in the technical field of instant fried noodles can be used without particular restriction.

By using the above calcium-containing material as one of the noodle raw materials, it is possible to suppress the swelling of noodle strands during deep-frying and drying. Furthermore, the above-mentioned calcium-containing material can increase the content of moisture of the dough while maintaining noodle production suitability. As a result, it is possible to effectively utilize the moisture contained in the raw noodle strands to highly promote gelatinization of the noodle strands even with only deep-frying and drying. The instant fried noodles of the present disclosure have a high degree of gelatinization, and thus, the powdery taste and uncooked sensation during consumption are eliminated. Since swelling of the noodle strands is suppressed, the density of the noodle strands is high, and together with the high degree of gelatinization, the noodle strands have an excellent chewy and firm texture. Furthermore, as a result of suppressing the swelling of the noodle strands, it is possible to reduce the oil content entering the inside of the noodle strands from the surface during deep-frying and drying. This not only reduces the amount of oil used for deep-frying and drying, but also improves the flavor of instant fried noodles.

<Noodle Raw Material>

As the noodle raw material for instant fried noodles, any material conventionally used for producing instant fried noodles can be used without any particular limitation. Specifically, for example, the main raw materials and auxiliary ingredients listed in pages 52 to 62 of "Introduction to Instant Noodles - New Edition" published by The Japan Food Journal, Co., Ltd. (1998) supervised by the Japan Instant Food Industry Association can be used.

(Main Raw Material)

Examples of the main raw material include grain flours such as wheat flour, buckwheat flour, barley flour, and rice flour. The main raw material may further include starch.
In one embodiment, the main raw material includes wheat flour. In this embodiment, the main raw material may further include starch.
Examples of wheat flour include ASW (Australian white intermediate wheat, about 10% protein) and HRW (American red hard wheat, about 11% protein).
Examples of the optional starch include sweet potato starch, potato starch, tapioca starch, waxy corn starch, corn starch, and wheat starch. Ether modified starch, ester modified starch, crosslinked modified starch, and acid modified starch obtained using these starches as raw materials can also be used.
As the starch, tapioca starch, potato starch, waxy corn starch, and etherified modified starches and esterified modified starches thereof are preferred. Since tapioca starch, potato starch, and waxy corn starch have a lower gelatinization temperature than wheat flour and absorb a large amount of water, they are easily gelatinized during deep-frying and drying. Thus, the degree of gelatinization of noodle strands can be effectively increased.
The above effects can be further enhanced by subjecting the tapioca starch, potato starch, or waxy corn starch to an ether modification or an ester modification. The modification method and modification degree of each of the ether modification and the ester modification are not particularly limited. Examples of ether modified starches include hydroxypropyl starch. Examples of the ester modified starches include starch acetate, starch phosphate, and starch octenyl succinate.
The starch may be crosslinked. The use of a moderately cross-linked starch or a highly cross-linked starch tends to provide a chewier texture during consumption. When using a moderately cross-linked starch or highly cross-linked starch, it is preferable to adjust other factors (for example, lower the protein mass of the wheat flour).
When a starch is used, the amount used varies depending on the desired thickness of the noodle strands, but is preferably 1 to 50 mass%, and more preferably 5 to 40 mass%, based on the mass of the main raw material. In the case of thin noodles such as *tonkotsu* ramen, the amount of starch used may be small, but as the noodles become medium or thick, it is preferable that the amount of starch used be increased to ensure hot water rehydration properties at the time of consumption. By setting the amount of starch used at 1 mass% or more, it is possible to ensure suitable hot water rehydration properties and texture at the time of consumption. By controlling the amount of starch used to 50 mass% or less, it is possible to suppress stickiness of the noodle belt during instant fried noodle production to increase production efficiency.

(Calcium-Containing Material)

The calcium-containing material is at least one selected from the group consisting of calcined calcium and calcium hydroxide. In the present disclosure, calcined calcium refers to a material comprising calcium oxide, as a main component, obtained by calcining a raw material such as lime, shells, or eggshells and is distinguished from calcium phosphate obtained by calcining a raw material such as fish bones or whey. Calcium hydroxide may be added externally, or may be generated by hydration of the calcined calcium with moisture in a noodle raw material.
Generally, calcined calcium is used to enhance the chewy texture of fresh or dried noodle strands or to replace brine. It is known that when calcined calcium is used in conventional instant fried noodles produced through a steaming process and a deep-frying process, the surface of the noodle strands may burn (excessive browning) during deep-frying and drying due to the high pH of calcined calcium. According to the present disclosure, even if calcined calcium is used in the deep-frying and drying of raw noodles without performing a steaming process, the effects of the present disclosure can be obtained without causing burning on the surface of the noodle strands, and without making the appearance and taste of the noodle strands to a level unacceptable as a product.
The amount of the calcium-containing material used can be appropriately determined depending on the starch used, and the pH of additives, etc. For example, the amount of calcium-containing material used can be 0.05 parts by mass to 0.5 parts by mass, 0.08 parts by mass to 0.4 parts by mass, or 0.1 parts by mass to 0.35 parts by mass based on 100 parts by mass of the main raw material. By controlling the amount of the calcium-containing material used to within the above range, it is possible to suppress swelling of the noodle strands and effectively promote gelatinization of the noodle strands while maintaining the appearance and taste of the noodle strands at a level acceptable as a product.

(Auxiliary Ingredients)

The noodle raw material may further include auxiliary ingredients. Examples of the auxiliary ingredients include brine, phosphates, salt, eggs, heat-coagulable proteins, and gluten. The auxiliary ingredients may be mixed with the main raw material in the form of a powder, or may be dissolved in water and mixed with the main raw material.

By using heat-coagulable protein as an auxiliary ingredient, the oil content in instant fried noodles can be further reduced. Though not to be bound by theory, it is believed that heat-coagulable proteins gel or coagulate upon heating, thereby inhibiting oil from entering the interior of instant fried noodles during deep-frying and drying. The heat-coagulable protein may be mixed with the main raw material in powder form, or may be dissolved in water and mixed with the main raw material. The heat-coagulable protein is preferably in the form of a powder that has been subjected to a process such as spray drying or freeze-pulverization drying.

Examples of heat-coagulable proteins include egg protein (egg white), soybean protein, and whey protein concentrate. Egg protein (egg white) and whey protein concentrate are preferable since they have a high gelling ability and can effectively reduce oil content.

The heat-coagulable protein is preferably water-soluble. By using a water-soluble heat-coagulable protein such as egg protein (egg white), it is possible to further increase the moisture content of the dough and further promote gelatinization of the noodle strands.

The amount of heat-coagulable protein used is preferably 0.1 parts by mass to 5 parts by mass, and more preferably 0.2 parts by mass to 2 parts by mass, based on 100 parts by mass of the main raw material.

(Water)

The amount of water added to the main raw material and the optional auxiliary ingredients (also referred to as "hydration rate" in the present disclosure) is preferably 35 parts by mass to 45 parts by mass, and more preferably 38 parts by mass to 43 parts by mass, based on 100 parts by mass of the main raw material. According to the present disclosure, since the calcium-containing material is present in the noodle raw material, the hydration rate can be increased to a high level while maintaining noodle production suitability. As a result, the moisture contained in raw noodle strands can be effectively utilized to highly promote gelatinization of the noodle strands even with only deep-frying and drying.

<Preparation of Dough>

Dough (noodle dough) can be obtained by kneading the main raw material, calcium-containing material, water, and optionally auxiliary ingredients using a mixing device such as a kneader or a planetary mixer. Powdered auxiliary ingredients such as gluten may be mixed with the main raw material in advance. Salt, brine, etc., may be dissolved in water in advance.

(Vacuum Extrusion)

The density of the dough may be increased by kneading the noodle raw material and then extruding the dough under reduced pressure using an extruder. The dough extruded by an extruder may be formed into small pieces of a cylindrical, spherical, flat, or irregularly shape. By increasing the density of the dough via vacuum extrusion, it is possible to further suppress swelling of noodle strands, and it is also possible to suppress oil from entering the instant fried noodles during deep-frying and drying, thereby effectively reducing the oil content in the instant fried noodles.

The extruder that can be used is not particularly limited as long as it can reduce the pressure inside the barrel into which the dough is introduced. As the extruder, for example, the deaerator in the dough production device described in JPS61-132132A can suitably be used.

Vacuum extrusion can be carried out by applying pressure to the dough under a vacuum degree of 70 kPa to 101 kPa inside the extruder. The diameter (maximum diameter) of the openings of the die attached to the extruder can be 20 mm to 50 mm. The shape of the openings in the die is not particularly limited. Examples of the shape of the openings in the die include circular, oval, triangular, and quadrangular.

When the extrudate is extruded from the die openings, small pieces can be obtained by intermittently cutting the extrudate using a cutter or the like disposed near the die openings. The length of the small pieces along the extrusion direction can be, for example, 20 mm to 300 mm. In another embodiment, the noodle belt may be directly extruded by vacuum extrusion.

<Cutting of Raw Noodle Strands>

The cutting of raw noodle strands from dough generally includes processing the dough into a sheet having a thickness suitable for cutting noodle strands and forming a noodle belt, and cutting the obtained noodle belt into raw noodle strands using a noodle strand cutting device.

A dough is passed through rolling rollers to form sheet-like coarse noodle belts, and two or three of the coarse noodle belts are stacked using a compounding machine and then passed through subsequent rolling rollers to reduce the thickness to a predetermined value, whereby a noodle belt can be formed. A known compounding machine and rolling rollers can be used. The thickness of the noodle belt may be an arbitrary thickness which is suitable for cutting raw noodle strands, and may be, for example, 0.5 mm to 10 mm.

Raw noodle strands can be formed by cutting the noodle belt using a noodle strand cutting device. A known noodle strand cutting device can be used. Examples of the cutting blade include round blades and square blades. The width of the raw noodle strands can be, for example, 1 mm to 10 mm. The thickness of the raw noodle strands can be, for example, between 0.5 mm and 10 mm.

<Deep-Frying and Drying>

Next, the raw noodle strands are deep-fried and dried without steaming. Deep-frying and drying generally involves cutting the raw noodle strands into edible units, forming and filling the cut raw noodle strands into a retainer (basket), placing a lid on the retainer to create a retainer containing the raw noodle strands, and immersing it in heated oil. According to the present disclosure, deep-frying and drying may be faster because there is no excess moisture attached to or absorbed by the noodle strands during steaming.

Examples of the oil used for deep-frying and drying include palm oil, lard, rapeseed oil, sesame oil, and blends of two or more of these.

The deep-frying and drying temperature is preferably 140°C or higher, more preferably 145°C or higher, and further preferably 148°C or higher. By deep-frying and drying the raw noodle strands at 140°C or higher, gelatinization of the noodle strands can be effectively promoted. The deep-frying and drying temperature is preferably 165°C or lower, and more preferably 160°C or lower. By performing the deep-frying and drying at 165°C or lower, burning of the noodle strands can be effectively suppressed or prevented.

Deep-frying and drying is preferably performed at the above-mentioned suitable temperature range from the initial stage. In the present disclosure, by deep-frying and drying the raw noodle strands without steaming, the main raw material contained in the noodle raw material is highly gelatinized at the same time that the raw noodle strands are dried. Thus, by setting the deep-frying and drying temperature to a high temperature from the initial stage when the raw noodle strands contain a large amount of moisture, gelatinization of the noodle strands can be efficiently promoted and the deep-frying and drying time can also be reduced. Specifically, the time for deep-frying and drying at a temperature lower than the above-mentioned suitable temperature range is preferably 10 seconds or less, and more preferably 5 seconds or less. In one embodiment, the time for deep-frying and drying at lower than 140°C is 10 seconds or less, and preferably 5 seconds or less.

Water may be attached to the raw noodle strands before deep-frying and drying. This can promote gelatinization near the surface of the noodle strands and effectively suppress swelling of the noodle strands during deep-frying and drying. By attaching water to the mass of raw noodle strands before deep-frying and drying, it is also possible to promote adhesion between the noodle strands and increase the strength of the mass of the noodle strands of instant fried noodles. Water can be attached using a spray, a brush, or the like. The amount of water attached is preferably 2 parts by mass to 8 parts by mass, and more preferably 3 parts by mass to 6 parts by mass, based on 100 parts by mass of the raw noodle strands.

Deep-frying and drying is carried out until the moisture content of the noodle strands is preferably 1 mass% to 10 mass%, and more preferably 2 mass% to 5 mass%.

After deep-frying and drying, if necessary, the oil content may be reduced by centrifugation or the like, or the instant fried noodles may be forcibly cooled using a fan, air compressor, or the like.

[Instant Fried Noodles]

The instant fried noodles of an embodiment contain at least one calcium-containing material selected from the group consisting of calcined calcium and calcium hydroxide, have a degree of gelatinization of 70% to 86%, and have an oil content of 18 mass% to 28 mass%. The degree of gelatinization in the present disclosure is determined by the second glucoamylase method using glucoamylase manufactured by Toyobo Co., Ltd. as the enzyme. The oil content is determined by the method described in the Examples.

In this embodiment, the degree of gelatinization of the instant fried noodles is 70% or more, preferably 72% or more, and more preferably 75% or more. When the degree of gelatinization of the instant fried noodles is 70% or more, noodle strands which do not have a powdery taste or uncooked sensation when eaten and which have an excellent chewy and firm texture can be provided. In this embodiment, the degree of gelatinization of the instant fried noodles is 86% or less, preferably 84% or less, and more preferably 82% or less. When the degree of gelatinization of the instant fried noodles is 86% or less, excessive binding of the noodle strands to each other can be suppressed and loosening of the noodle strands at the time of consumption can be secured.

In this embodiment, the oil content of the instant fried noodles is 18 mass% to 28 mass%. In this embodiment, the oil content of the instant fried noodles is preferably 26 mass% or less, and more preferably 25 mass% or less.

The arithmetic mean roughness Sa of the surface of the instant fried noodles in one embodiment is 2 μm to 5.3 μm. The arithmetic mean roughness Sa is determined by the method described in Examples. The instant fried noodles of this embodiment have lower surface roughness than conventional instant fried noodles that are formed by deep-frying and drying steam-gelatinized raw noodle strands. Without wishing to be bound by theory, it is believed that the reason why the surface roughness of the instant fried noodles in this embodiment is small is that because the raw noodle strands are not steamed, gelatinization of starch granules on the surface of noodle strands does not progress before deep-frying and drying, and a film of gelatinized starch is not formed on the surface of noodle strands or is relatively sparse. The absence or sparseness of a film of gelatinized starch on the surface of the noodle strands facilitates the escape of moisture or water vapor from the interior of the noodle strands without roughening the surface of the noodle strands during deep-frying and drying. This also makes it possible to shorten the deep-frying time. Conversely, when raw noodle strands are steamed, gelatinization of starch granules on the surface of the noodle strands progresses, and a film of gelatinized starch is formed on the surface of the noodle strands. Thus, during deep-frying and drying, it is difficult for moisture or water vapor to escape from inside the noodle strands, and when these are released from the surface of the noodle strands to the outside, the gelatinized starch film is broken. This roughens the surface of the noodle strands and increases the surface roughness of the instant fried noodles.

In one embodiment, the instant fried noodles have a calcium-containing material content of 0.057 mass% to 0.57 mass%.

The instant fried noodles production method and instant fried noodles of the present disclosure can be applied to various product forms, such as a stewed noodles that are boiled in boiling water and cup noodles onto which boiling water is poured at the time of consumption. Since an excellent taste and texture can be obtained even with a small amount of heat, the method for producing instant fried noodles and the instant fried noodles of the present disclosure can be advantageously applied to cup-type noodles onto which boiling water is poured at the time of consumption.

EXAMPLES

The present invention will be explained in more detail below based on Examples and Comparative Examples, but the present invention is not limited to these Examples.

Comparative Example 1 and Comparative Example 2

The following test was conducted to compare conventional steamed instant fried noodles and non-steamed instant fried noodles. 40 parts by mass of water, based on 100 parts by mass of the main raw material (total of wheat flour and tapioca starch) were added to 8 kg of wheat flour (9.5 mass% protein), 2 kg of tapioca starch (DS 0.02), 30 g of salt, 10 g of sodium carbonate, and 30 g of phosphate, and the obtained mixture was kneaded to obtain a dough. The dough was rolled to form a noodle belt using a conventional method, and the resulting noodle belt was cut using a No. 18 round cutting blade to obtain raw noodle strands having a noodle thickness of 1.5 mm.

In Comparative Example 1, the raw noodle strands were steamed for 3 minutes in a steamer set at a temperature of 100°C. In Comparative Example 2, the raw noodle strands were not steamed.

The steamed noodle strands (Comparative Example 1) or raw noodle strands (Comparative Example 2) were cut into 30 cm pieces to obtain 110 g of noodle strands. In Comparative Example 1, the steamed noodle strands were sprayed with 50 mL of 3 mass% salt water, filled into a mold having a 121 mm × 136 mm upper surface, a 109 mm × 124 mm lower surface, and a height of 29 mm, which was then covered with a lid, and deep-fried and dried in palm oil at 150°C for approximately 2 minutes, whereby instant fried noodles having a moisture content of approximately 2 mass% were obtained. In Comparative Example 2, the raw noodle strands were directly filled into the same mold as in Comparative Example 1, which was then covered, and deep-fried and dried in palm oil at 150°C for approximately 1 minute, whereby instant fried noodles having a moisture content of approximately 2 mass% were obtained.

<Moisture Content>

2 g of noodle strands were taken out from the instant fried noodles and dried at 105°C for 2 hours using an electric dryer (trade name DN-41, Yamato Scientific Co., Ltd.). The moisture content was determined from the mass difference before and after drying.

<Degree of Gelatinization>

The degree of gelatinization of the instant fried noodles was determined by the second glucoamylase method using glucoamylase manufactured by Toyobo Co., Ltd., as the enzyme. The measurement conditions were based on the "degree of gelatinization" (http://www.jfrl.or.jp/item/nutrition/post-35.html) of the Japan Food Research Laboratories.

<Oil Content>

The oil content of the instant fried noodles was determined by the following procedure. 5 g of the instant fried noodles, which had been crushed and homogenized, was weighed, and the fats and oils were extracted with diethyl ether using a Soxhlet extractor. The oil content was determined from the mass difference before and after extraction.

<Taste and Texture>

90 g of instant fried noodles were placed in a polystyrene foam (PSP) cup, 530 mL of 100°C boiling water was poured into the PSP cup, and the cup was quickly covered with aluminum foil and left to stand for 3 minutes for hot water rehydration. Time was measured using a stopwatch (trade name: Seiko Stopwatch S052, manufactured by Seiko S-Yard Co., Ltd.). After accurately measuring for 3 minutes, the mass of the noodle strands was quickly loosened and the taste and texture were evaluated.

Table 1 shows the evaluation results of the degree of gelatinization, oil content, swelling state of the noodle strands, and taste and texture of the instant fried noodles of Comparative Examples 1 and 2.

[Table 1]

Table 1

|  | Degree of gelatinization (%) | Oil content (mass%) | State of swelling of noodle strands | Taste and texture |
|---|---|---|---|---|
| Comp Ex 1 | 87 | 21 | Small | Had texture of conventional fried noodles |
| Comp Ex 2 | 75 | 27 | Large | Non-chewy texture, powdery taste, and uncooked sensation. Less dense than Comp Ex 1. |

Comparative Example 1 and Comparative Example 2 were significantly different in taste and texture. It is believed that the degree of gelatinization and swelling state of the noodle strands influenced the taste and texture. When the noodles are not steamed, the oil content increases. If the oil content of instant fried noodles is high, not only will it be difficult to apply it to health-oriented products, but it may also be difficult for water to penetrate inside the noodle strands, resulting in deteriorated hot water rehydration properties.

<Cross-Sectional Area of Noodle Strands>

The cross-sectional areas of the noodle strands of the instant fried noodles of Comparative Example 1 and Comparative Example 2 were determined from images of the cross-sections of the noodle strands taken at 100x magnification using a digital microscope (product name VHX-7000, Keyence Corporation). In the cross-sectional image of the noodle strands, approximately 20 points on the outer circumference of the noodle strands were plotted, and the cross-sectional area was automatically calculated using software included with the digital microscope. Five noodle strands were collected as samples from the instant fried noodles (sample a to sample e), and the average value of the five samples was used as the cross-sectional area of the noodle strands.

Table 2 shows the cross-sectional areas of the noodle strands of the instant fried noodles of Comparative Examples 1 and 2.

[Table 2]

Table 2 (unit is mm²)

|            | a   | b   | c   | d   | e   | Avg value |
|------------|-----|-----|-----|-----|-----|-----------|
| Comp Ex 1  | 2.9 | 2.7 | 3.0 | 2.9 | 2.9 | 2.88      |
| Comp Ex 2  | 3.7 | 3.8 | 3.7 | 3.3 | 3.9 | 3.68      |

It was found that the noodle strands swelled more when deep-frying and drying without steam. Based on the average value of the cross-sectional area of the noodle strands, when the degree of swelling of Comparative Example 2 was set as 100%, the degree of swelling of Comparative Example 1 was 78%. Excessive swelling of the noodle strands is thought to provide a less dense (less chewy) texture.

Example 1 and Comparative Example 3

The effects of calcined calcium were confirmed via the following tests. 20 g of calcined calcium was added to 8 kg of wheat flour (9.5 mass% protein), 2 kg of tapioca starch (DS 0.02), 30 g of salt, 10 g of sodium carbonate, and 30 g of phosphate in Example 1 but not in Comparative Example 3. Water was added in an amount of 41 parts by mass based on 100 parts by mass of the main raw material (total of wheat flour and tapioca starch), and the resulting mixture was kneaded to obtain a dough. The dough was rolled to form a noodle belt using a conventional method, and the resulting noodle belt was cut using a No. 18 round cutting blade to obtain raw noodle strands having a noodle thickness of 1.5 mm.

The raw noodle strands were cut into 30 cm pieces to obtain 110 g of raw noodle strands. The raw noodle strands were directly filled into the same mold as in Comparative Example 1, which was then covered, and deep-fried and dried in palm oil at 155°C for 1 minute to obtain instant fried noodles having a moisture content of approximately 2 mass%.

Table 3 shows the evaluation results of the degree of gelatinization, oil content, noodle production suitability, swelling state of the noodle strands, and taste and texture of the instant fried noodles of Example 1 and Comparative Example 3.

[Table 3]

Table 3

|            | Degree of gelatinization (%) | Oil content (mass%) | Swelling state of noodle strands | Noodle production suitability | Taste and texture |
|------------|------------------------------|---------------------|----------------------------------|-------------------------------|-------------------|
| Comp Ex 3  | 77                           | 24                  | Large                            | Not suitable                  | Non-chewy texture and powdery taste |
| Ex 1       | 77                           | 24                  | Small                            | Suitable                      | Chewy and suitable with cooked sensation |

The use of calcined calcium suppressed swelling of the noodle strands during deep-frying and drying. Without the addition of calcined calcium, the dough and noodle strands were excessively soft, resulting in poor noodle production suitability. These results show that by using calcined calcium, instant fried noodles can be produced at a high hydration rate while maintaining noodle production suitability. The degree of gelatinization by the second glucoamylase method in Example 1 and Comparative Example 3 was substantially unchanged.

<DSC measurement>

Differential scanning calorimetry (DSC) was performed on Example 1, Comparative Example 1, and Comparative Example 3. The measurement conditions were as follows.

Device: DSC-60 (Shimadzu Corporation)
Reference: 20 μL of water
Starting temperature: 30°C
Target temperature: 110°C
Heating rate: 10°C/min
Atmosphere: air

Table 4 shows the results of DSC measurement.

[Table 4]

Table 4

|  | Endothermic start temp (°C) | Endothermic end temperature (°C) | Heat amt (J/g) |
|---|---|---|---|
| Comp Ex 1 | 45.11 | 59.76 | -0.68 |
| Comp Ex 3 | 45.09 | 59.73 | -2.04 |
| Ex 1 | 43.12 | 59.28 | -1.39 |

When calcined calcium was used, the endothermic start temperature was lowered. This means that the temperature at which noodle strands begin to gelatinize is lower, and hot water rehydration proceeds quickly even at low temperatures. When Example 1 and Comparative Example 3 are compared, there was no significant difference in the degree of gelatinization using the second glucoamylase method, but the endothermic value of Example 1, in which calcined calcium was used, was smaller according to DSC. This suggests that the amount of raw starch (ungelatinized starch) contained in the instant fried noodles of Example 1 was relatively small, and that more starch was gelatinized in the instant fried noodles of Example 1 than in the instant fried noodles of Comparative Example 3.

Comparative Example 4

As compared to comparative Example 3, the amount of water added was reduced to 38 parts by mass based on 100 parts by mass of the main raw material to obtain the instant fried noodles of Comparative Example 4 such that the noodle production suitability was equivalent to that of Example 1.

Table 5 shows the evaluation results of the degree of gelatinization, oil content, noodle production suitability, swelling state of the noodle strands, and taste and texture of the instant fried noodles of Example 1 and Comparative Example 4.

[Table 5]

Table 5

|  | Hydration rate (parts by mass)*) | Degree of gelatinization (%) | Oil content (mass%) | Swelling state of noodle strands | Noodle production suitability | Taste and texture |
|---|---|---|---|---|---|---|
| Ex 1 | 41 | 77 | 24 | Small | Suitable | Chewy and suitable with cooked sensation |
| Comp Ex 4 | 38 | 75 | 28 | Large | Suitable | Oil content leaked; rehydration was difficult |
| *) Hydration rate based on 100 parts by mass of main raw materials | | | | | | |

In Comparative Example 4, when the hydration rate was reduced in order to obtain the same noodle production suitability as in Example 1, the oil content of the instant fried noodles increased and the hot water rehydration properties were deteriorated.

<Cutting Load>

The cutting strengths of the noodle strands of Example 1 and Comparative Example 4 after hot water rehydration were measured. 90 g of instant fried noodles were placed in a polystyrene foam cup (PSP), 530 mL of 100°C hot water was poured into the PSP cup, and the cup was quickly covered with aluminum foil and allowed to stand for 3 minutes. After removing the lid, the noodle strands were loosened using disposable chopsticks to complete hot water rehydration.
After 1, 3, or 5 minutes had elapsed from the completion of the hot water rehydration, the hot water was quickly separated from the noodle strands. Two noodle strands were placed on the plate of a rheometer (product name: NRM-2010-CW, Fudo Kogyo Co., Ltd.), and 10 seconds after the hot water was separated from the noodle strands, the noodle strands were cut by pressing thereagainst with piano wire having a diameter of 0.27 mm at a table speed of 2 cm/min. The load when the noodle strands were completely cut was measured. The value obtained by dividing the measured value by two was defined as the cutting load.
Table 6 shows the cutting load results.

[Table 6]

Table 6

| | Cutting load (gf) | | |
|---|---|---|---|
| | Time from completion of hot water rehydration | | |
| | After 1 min | After 3 min | After 5 min |
| Ex 1 | 41.0 | 27.7 | 21.9 |
| Comp Ex 4 | 35.2 | 21.3 | 16.9 |

Higher cutting loads were obtained when calcined calcium was used. This suggests that the use of calcined calcium improves the chewy texture of the noodle strands after hot water rehydration.
Table 7 shows the cross-sectional areas of the noodle strands of the instant fried noodles of Example 1, Comparative Example 3, and Comparative Example 4.

[Table 7]

Table 7 (unit is mm$^2$)

| | a | b | c | d | e | Avg value |
|---|---|---|---|---|---|---|
| Comp Ex 3 | 3.7 | 3.8 | 3.7 | 3.3 | 3.9 | 3.68 |
| Ex 1 | 3.2 | 3.1 | 3.3 | 3.2 | 3.1 | 3.18 |
| Comp Ex 4 | 3.7 | 3.6 | 3.6 | 3.5 | 3.9 | 3.66 |

The use of calcined calcium suppressed swelling of the noodle strands during deep-frying and drying. When calcined calcium was not added, the difference in hydration rate had little effect on swelling.

<Cutting Strength>

For Example 1 and Comparative Example 4, the cutting strength was calculated from the cutting load (gf) and the cross-sectional area (mm$^2$) of the noodle strands. Cutting strength is defined by the following formula.

$$\text{Cutting strength (mN/mm}^2) = \text{cutting load (gf)} \times 9.80665 / \text{cross-sectional area of noodle strands (mm}^2)$$

Table 8 shows the cutting strength of the instant fried noodles noodle strands of Example 1 and Comparative Example 4.

[Table 8]

Table 8

|  | Cutting strength (N/mm²) | | |
|---|---|---|---|
|  | Time from completion of hot water rehydration | | |
|  | After 1 min | After 3 min | After 5 min |
| Ex 1 | 126 | 85.0 | 68.0 |
| Comp Ex 4 | 108 | 66.0 | 52.0 |

<Compressive Strength>

The compressive strengths of the noodle strands of the instant fried noodles of Example 1, Comparative Example 3, and Comparative Example 4 were measured. Noodle strands each having a length of 10 mm were sampled from five locations at the center (A) and four corners (B to E) of the mass of instant fried noodles to serve as test samples. The test samples were each placed on the stage of a compression tester EZ-LX (Shimadzu Corporation) equipped with a 500 N load cell, from a state in which the interval between platen having a diameter of 30 mm and the stage was 3 mm, the platen was lowered at a stroke of 2 mm and a speed of 5 mm/min, and the maximum value of the load applied to the platen was measured. The average of the measured values of test samples A to E was taken as the compressive strength.

Table 9 shows the compressive strengths of the noodle strands of the instant fried noodles of Example 1, Comparative Example 3, and Comparative Example 4.

[Table 9]

Table 9

|  | Compressive strength (N) | | | | | |
|---|---|---|---|---|---|---|
|  | A | B | C | D | E | Avg value |
| Ex 1 | 29.22 | 27.63 | 22.89 | 18.84 | 33.84 | 26.48 |
| Comp Ex 3 | 21.53 | 26.32 | 22.38 | 20.74 | 24.13 | 23.02 |
| Comp Ex 4 | 14.49 | 17.02 | 18.46 | 18.38 | 27.37 | 19.14 |

The use of calcined calcium improved the strength of the noodle strands of the instant fried noodles.

Examples 2 to 5

Instant fried noodles were obtained in the same manner as in Example 1, except that the amount of calcined calcium used was changed as shown in Table 10.

Table 10 shows the evaluation results of the degree of gelatinization, oil content, appearance of the noodle strands, noodle production suitability, and taste and texture of the instant fried noodles of Examples 2 to 5.

[Table 10]

Table 10

|  | Calcined calcium addition amt (g) | Degree of gelatinization (%) | Oil content (mass%) | Appearance of noodle strands | Noodle production suitability | Taste and texture |
|---|---|---|---|---|---|---|
| Ex 2 | 5 | 75 | 26 | Suitable | OK | Low in density, acceptably chewy |
| Ex 3 | 10 | 77 | 25 | Suitable | Suitable | Chewy and suitable with cooked sensation |
| Ex 4 | 30 | 75 | 24 | Slightly brown | Suitable | Chewy and suitable with cooked sensation |
| Ex 5 | 40 | 75 | 25 | Brown | Suitable | Chewy and suitable Slightly bitter |

Although the amount of calcined calcium used was changed, the degree of gelatinization and oil content did not change significantly. As the amount of calcined calcium increased, the appearance of the noodle strands changed to brown. When the amount of calcined calcium used was high, the bitterness of the calcined calcium was slightly perceived.

<Cross-Sectional Area of Noodle Strands>

Table 11 shows the cross-sectional areas of the noodle strands of the instant fried noodles of Examples 2 to 5 as well as Comparative Example 3.

[Table 11]

| Table 11 (unit is mm$^2$) | | | | | | |
|---|---|---|---|---|---|---|
|  | a | b | c | d | e | Avg value |
| Comp Ex 3 | 3.7 | 3.8 | 3.7 | 3.3 | 3.9 | 3.68 |
| Ex 2 | 3.3 | 3.3 | 3.2 | 3.3 | 3.3 | 3.26 |
| Ex 3 | 3.2 | 3.2 | 3.2 | 3.3 | 3.2 | 3.22 |
| Ex 4 | 2.9 | 2.9 | 3.0 | 3.0 | 2.8 | 2.92 |
| Ex 5 | 2.8 | 3.0 | 2.9 | 2.9 | 2.8 | 2.88 |

When the amount of calcined calcium used was increased, swelling of the noodle strands could be further suppressed.

Examples 6 to 11

Instant fried noodles were obtained in the same manner as in Example 1, except that the temperatures and times of deep-frying and drying were changed as shown in Table 12.
Table 12 shows the evaluation results of the degree of gelatinization, oil content, and taste and texture of the instant fried noodles of Examples 6 to 11.

[Table 12]

Table 12

| | Frying and drying | | Degree of gelatinization (%) | Oil content (mass%) | Taste and texture |
|---|---|---|---|---|---|
| | Temp (°C) | Time (sec) | | | |
| Ex 6 | 140 | 75 | 75 | 25 | Acceptably chewy |
| Ex 7 | 145 | 68 | 74 | 25 | Acceptably chewy |
| Ex 8 | 150 | 60 | 75 | 25 | Chewy and suitable with cooked sensation |
| Ex 9 | 155 | 50 | 75 | 24 | Chewy and suitable with cooked sensation |
| Ex 10 | 160 | 50 | 78 | 23 | Chewy and suitable with cooked sensation |
| Ex 11 | 165 | 45 | 78 | 23 | Chewy and suitable slightly bitter with slightly brown surface |

Examples 12 to 14

Instant fried noodles were obtained in the same manner as in Example 1, except that the deep-frying and drying conditions were changed as shown in Table 13.

Table 13 shows the degree of gelatinization, oil content, swelling state of the noodle strands, and taste and texture of the instant fried noodles of Examples 12 to 14.

[Table 13]

Table 13

| | Frying and drying conditions | Degree of gelatinization (%) | Oil content (mass%) | Swelling state of noodle strands | Taste and texture |
|---|---|---|---|---|---|
| Ex 12 | 130°C, 10 sec/ 160°C, 45 sec | 73 | 24 | Small | Acceptably chewy |
| Ex 13 | 130°C, 30 sec/ 160°C, 40 sec | 70 | 25 | Moderate | Less but acceptably chewy |
| Ex 14 | 140°C, 30 sec/ 160°C, 30 sec | 73 | 24 | Small | Chewy and suitable with cooked sensation |

Example 15

The effect of vacuum extrusion was confirmed via the following test. Instant fried noodles were obtained in the same manner as in Example 1, except that the noodle raw material was kneaded and then extruded under reduced pressure using an extruder to obtain small pieces of dough. Specifically, pressure was applied to the dough under a reduced pressure of 86 kPa inside the extruder, and the cylindrical extrudate was extruded through a die having circular opening having a diameter of 80 mm, and the extrudate was intermittently cut into small pieces having a length of approximately 50 mm. The obtained small pieces were rolled to form noodle belts, and the resulting noodle belts were cut using a No. 18 round cutting blade to obtain raw noodle strands having a noodle thickness of 1.5 mm.

Table 14 shows the evaluation results of the oil content, cross-sectional area of the noodle strands, and taste and texture of the instant fried noodles of Example 15 as well as Example 1.

[Table 14]

Table 14

|  | Oil content (mass%) | Cross-sectional area of noodle strands (mm$^2$) | Taste and texture |
|---|---|---|---|
| Ex 1 | 24 | 3.18 | Chewy and suitable with cooked sensation |
| Ex 15 | 20 | 2.60 | More chewy and excellent with cooked sensation |

By increasing the density of the dough using vacuum extrusion, swelling of the noodle strands could be further suppressed and the oil content could be reduced.

Examples 16 to 18

The effect of heat-coagulable protein was confirmed via the following test. While adjusting the hydration rate thereof so as to achieve the same noodle production suitability, 9 kg of wheat flour (protein: 10.5 mass%), 1 kg of raw potato starch, 20 g of calcined calcium, 30 g of salt, 10 g of brine (sodium carbonate), and egg protein (Example 17 and Example 18 only) were kneaded to obtain a dough. The dough was rolled to form a noodle belt using a conventional method, and the resulting noodle belt was cut using a No. 24 round cutting blade to obtain raw noodle strands having a noodle thickness of 1.15 mm. In Example 16, no egg protein was added, and the amount of water added was 39 parts by mass based on 100 parts by mass of the main raw material (total of wheat flour and raw potato starch). In Example 17, 50 g of egg protein was added, and the amount of water added was 40 parts by mass based on 100 parts by mass of the main raw material. In Example 18, 100 g of egg protein was added, and the amount of water added was 41 parts by mass based on 100 parts by mass of the main raw material.

The raw noodle strands were cut into 30 cm pieces to obtain 85 g of raw noodle strands. The raw noodle strands were directly filled into a cylindrical mold having a top diameter of 95 mm, a bottom diameter of 74 mm, and a height of 68 mm, which was then covered with a lid, and deep-fried and dried in palm oil at 155°C for 1 minute to obtain instant fried noodles having a moisture content of approximately 2 mass%. These instant fried noodles were thin noodles suitable for *tonkotsu* ramen.

<Taste and Texture>

The taste and texture of each of Examples 16 to 18 was evaluated using the following procedure. 70 g of instant fried noodles were placed in a paper container, 430 mL of 100°C boiling water was then poured into the container, and the container was quickly covered with aluminum foil and allowed to stand for 2 minutes. After accurately measuring for 2 minutes, the mass of the noodle strands was quickly loosened and the taste and texture were evaluated.

Table 15 shows the evaluation results of the degree of gelatinization, oil content, cross-sectional area of noodle strands, and taste and texture of the instant fried noodles of Examples 16 to 18.

[Table 15]

Table 15

|  | Degree of gelatinization (%) | Oil content (mass%) | Cross-sectional area of noodle strands (mm$^2$) | Taste and texture |
|---|---|---|---|---|
| Ex 16 | 73 | 26 | 1.60 | Slightly soft with some oil content, but acceptable |
| Ex 17 | 77 | 23 | 1.60 | Chewy and suitable |

(continued)

| | Degree of gelatinization (%) | Oil content (mass%) | Cross-sectional area of noodle strands (mm$^2$) | Taste and texture |
|---|---|---|---|---|
| Ex 18 | 79 | 20 | 1.50 | Chewy and suitable |

By adding a water-soluble heat-coagulable protein, the oil content could be further reduced. Furthermore, by adding a water-soluble heat-coagulable protein, it was possible to increase the hydration rate and further increase the degree of gelatinization.

Example 19 and Comparative Examples 5 to 7

Instant fried noodles were obtained in the same manner as in Example 1, except that the ingredients listed in Table 16 were used instead of calcined calcium, and the hydration rate was changed so as to achieve the same noodle production suitability.

[Table 16]

Table 16

| | Ingredient | Addition amt (g) | Hydration rate (parts by mass)*) |
|---|---|---|---|
| Ex 19 | Calcium hydroxide | 20 | 42.5 |
| Comp Ex 5 | (Not used) | - | 40 |
| Comp Ex 6 | Calcium lactate | 30 | 40 |
| Comp Ex 7 | Calcined fish bone calcium (calcium phosphate) | 30 | 40 |
| *) Hydration rate based on 100 parts by mass of main raw materials | | | |

Table 17 shows the cross-sectional areas of the noodle strands of Example 19 and Comparative Examples 5 to 7.

[Table 17]

Table 17 (unit is mm$^2$)

| | a | b | c | d | e | Avg value |
|---|---|---|---|---|---|---|
| Ex 19 | 2.8 | 2.8 | 2.9 | 2.8 | 2.9 | 2.84 |
| Comp Ex 5 | 3.1 | 3.2 | 3.1 | 3.2 | 3.3 | 3.18 |
| Comp Ex 6 | 3.1 | 3.1 | 3.0 | 3.4 | 3.2 | 3.16 |
| Comp Ex 7 | 3.1 | 3.2 | 3.0 | 3.2 | 3.3 | 3.16 |

In the same manner as calcined calcium, calcium hydroxide was also able to suppress swelling of the noodle strands, and was able to increase the hydration rate while maintaining noodle production suitability. Calcium lactate and calcined fish bone calcium (calcium phosphate) were unable to suppress swelling of the noodle strands, nor were they able to increase the hydration rate.

Comparative Example 8

Instant fried noodles were obtained in the same manner as in Example 1, except that calcined calcium was not used and the amount of brine was increased. Specifically, 10 g of sodium carbonate was replaced with 50 g of potassium carbonate, and the amount of water added was changed to 40 parts by mass based on 100 parts by mass of the main raw material.

Table 18 shows the cross-sectional area of the noodle strands of Comparative Example 8.

[Table 18]

Table 18 (unit is mm$^2$)

|  | a | b | c | d | e | Avg value |
|---|---|---|---|---|---|---|
| Comp Ex 8 | 3.2 | 3.1 | 3.2 | 3.1 | 3.3 | 3.18 |

Even when the amount of brine was increased, the hydration rate could not be increased and swelling of the noodle strands could not be suppressed.

Example 20 and Example 21

Instant fried noodles were obtained by the same procedure as in Example 1, except that after filling the raw noodle strands into the mold, 2 g (Example 20) or 4 g (Example 21) of water was sprayed onto the mass of raw noodle strands using a sprayer. In Examples 20 and 21, the noodle strands attached to each other, and the strength of the mass of instant fried noodles was improved.

<Arithmetic Mean Roughness Sa>

The arithmetic mean roughness Sa of the surfaces of the instant fried noodles of Comparative Example 1, Example 1, Example 20, and Example 21 was measured under the following conditions. Three of the straightest noodle strands (noodle strands a, b, and c) were taken from a part of the instant fried noodles where there is no sudden blistering, each noodle strand was cut into 2 cm pieces, and the side surface roughness was measured at five arbitrary locations close to the center of the noodle strand to obtain the arithmetic mean roughness Sa of each noodle strand. The measured locations where Sz (maximum depth + maximum height) exceeded 100 μm were judged to be inappropriate as data and were rejected, and another location was remeasured.

Device: Digital microscope (product name VHX-7000, Keyence Corporation)
Magnification: 400x
Brightness: 40
Coaxial single shot
Measurement range: 600 μm × 500 μm
L filter 0.25 mm

Table 19 shows the arithmetic mean roughness Sa of the surfaces of each of the instant fried noodles of Comparative Example 1, Example 1, Example 20, and Example 21.

[Table 19]

Table 19

|  | Arithmetic mean roughness Sa (μm) | | | |
|---|---|---|---|---|
|  | a | b | c | Avg value |
| Comp Ex 1 | 6.095 | 5.455 | 4.930 | 5.493 |
| Ex 1 | 3.372 | 2.488 | 3.310 | 3.057 |
| Ex 20 | 4.064 | 4.546 | 3.698 | 4.103 |
| Ex 21 | 4.346 | 4.796 | 5.064 | 4.735 |

The surfaces of the instant fried noodles of Examples 1, 20, and 21 had smaller arithmetic mean roughness Sa, i.e., were smoother, than the steamed Comparative Example 1. The surface of the instant fried noodles of Example 1, to which no moisture was attached before deep-frying and drying, was the smoothest.

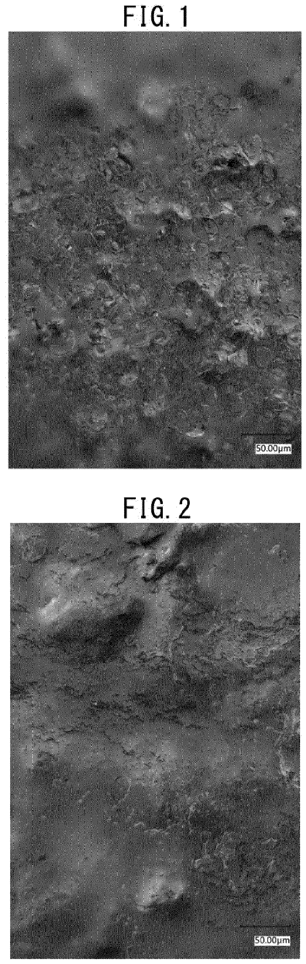

Microscopic photographs of the surfaces of the instant fried noodles of Example 1 and Comparative Example 1 are shown in FIGS. 1 and 2, respectively. The capture conditions were as follows.

Device: Digital microscope (product name VHX-7000, Keyence Corporation)
Magnification: 500x
Mode: Opt-SEM

In Example 1, the shape of the starch granules remained and the surface was relatively smooth. The fact that the shape of the starch granules remained suggests that gelatinization of the starch granules on the surface of the noodle strands did not proceed because steaming was not performed. Conversely, in Comparative Example 1, in which the raw noodle strands were steamed before deep-frying, it was observed that the shape of the starch granules was substantially lost, and the surface became rough and larger irregularities were formed during deep-frying and drying.

Example 22

42 parts by mass of water, based on 100 parts by mass of the main raw materials (total of wheat flour and tapioca starch), were added to 7 kg of wheat flour (protein: 10.5 mass%), 3 kg of tapioca starch (DS 0.08), 40 g of calcined calcium, 50 g of salt, 10 g of sodium carbonate, and 30 g of phosphate, and the resulting mixture was kneaded to obtain a dough. The dough was rolled to form a noodle belt using a conventional method, and the resulting noodle belt was cut using a No. 18 square cutting blade to obtain raw noodle strands having a noodle thickness of 1.32 mm.

The raw noodle strands were cut into 30 cm pieces to obtain 85 g of raw noodle strands. The raw noodle strands were directly filled into the same mold as in Example 16, which was then covered with a lid, and deep-fried and dried in palm oil at 150°C for 1 minute to obtain instant fried noodles having a moisture content of approximately 2 mass%. These instant fried noodles were suitable for miso ramen.

Example 23

43 parts by mass of water, based on 100 parts by mass of the main raw materials (wheat flour, buckwheat flour, and raw potato starch), were added to 6.5 kg of wheat flour (protein: 9.5 mass%), 0.5 kg of raw potato starch, 3 kg of buckwheat flour, 15 g of calcined calcium, 30 g of phosphate, and 50 g of egg white powder, and the resulting mixture was kneaded to obtain a dough. The dough was rolled to form a noodle belt using a conventional method, and the resulting noodle belt was cut using a No. 20 square cutting blade to obtain raw noodle strands having a noodle thickness of 0.90 mm.

The raw noodle strands were cut into 30 cm pieces to obtain 85 g of raw noodle strands. The raw noodle strands were directly filled into the same mold as in Example 16, which was then covered with a lid, and deep-fried and dried in palm oil at 150°C for 1 minute to obtain instant fried soba noodles having a moisture content of approximately 2 mass%.

<Taste and Texture>

The taste and texture of each of Examples 22 and 23 was evaluated using the following procedure. 70 g of instant fried noodles or instant fried soba noodles were placed in a paper container, 430 mL of 100°C boiling water was then poured thereon, and quickly covered with aluminum foil and allowed to stand for 5 minutes for Example 22 and 3 minutes for Example 23. Thereafter, the mass of the noodle strands was quickly loosened and the taste and texture were evaluated. Both the instant fried noodles of Example 22 and the instant fried soba noodles of Example 23 had a cooked sensation after hot water rehydration, and had a chewy and suitable taste and texture.

Example 24

45 parts by mass of water, based on 100 parts by mass of the main raw materials (total of wheat flour, buckwheat flour, potato starch, and tapioca starch), was added to 4 kg of wheat flour (protein 11.5 mass%), 3 kg of buckwheat flour, 2 kg of potato starch, 1 kg of tapioca starch (DS 0.02), 10 g of calcined calcium, 50 g of salt, and 15 g of phosphate, and the resulting mixture was kneaded to obtain a dough. The dough was rolled to form a noodle belt using a conventional method, and the resulting noodle belt was cut using a No. 20 square cutting blade to obtain raw noodle strands having a noodle thickness of 1.1 mm.

The raw noodle strands were cut into 30 cm pieces to obtain 70 g of raw noodle strands. The raw noodle strands were filled into a cylindrical mold having a top diameter of 87 mm, a bottom diameter of 72 mm, and a height of 66.5 mm, which was then covered with a lid, and deep-fried and dried in palm oil at 158°C for approximately 1 minute to obtain instant fried soba noodles having a moisture content of approximately 2 mass%.

<Taste and Texture>

The taste and texture of Example 24 was evaluated using the following procedure. 60 g of instant fried soba noodles were placed in a paper container, 320 mL of 100°C boiling water was then poured into the container, and the container was quickly covered with aluminum foil and allowed to stand for 3 minutes. Thereafter, the mass of the noodle strands was quickly loosened and the taste and texture were evaluated. The instant fried soba noodles of Example 24 had a cooked sensation after hot water rehydration, and had a chewy and suitable taste and texture.

INDUSTRIAL APPLICABILITY

The instant fried noodles production method and instant fried noodles of the present disclosure can suitably be applied to instant foods such as instant ramen noodles, instant yakisoba noodles, instant soba noodles, and instant udon noodles.

**Claims**

1.  A method for the production of instant fried noodles, comprising:

    kneading a noodle raw material containing a main raw material, at least one calcium-containing material selected from the group consisting of calcined calcium and calcium hydroxide, and water to obtain a dough,
    cutting raw noodle strands from the dough, and
    deep-frying and drying the raw noodle strands without steaming the raw noodle strands.

2.  The method according to claim 1, wherein a content of the calcium-containing material in the noodle raw material is 0.05 parts by mass to 0.5 parts by mass based on 100 parts by mass of the main raw material.

3.  The method according to claim 1 or 2, wherein the deep-frying and drying is performed at 140°C or higher.

4.  The method according to any one of claims 1 to 3, wherein the time at which the deep-frying and drying is performed below 140°C is 10 seconds or less.

5.  The method according to any one of claims 1 to 4, further comprising attaching water to the raw noodle strands before the deep-frying and drying.

6.  An instant fried noodle, having a degree of gelatinization of 70% to 86%, an oil content of 18 mass% to 28 mass%, and containing at least one calcium-containing material selected from the group consisting of calcined calcium and calcium hydroxide.

7.  The instant fried noodle according to claim 6, having a surface arithmetic mean roughness Sa of 2 $\mu$m to 5.3 $\mu$m.

8.  The instant fried noodle according to claim 6 or 7, wherein a content of the calcium-containing material is 0.057 mass% to 0.57 mass%.

## FIG. 1

50.00μm

## FIG. 2

50.00μm

## INTERNATIONAL SEARCH REPORT

| International application No. |
| --- |
| **PCT/JP2022/019603** |

### A. CLASSIFICATION OF SUBJECT MATTER

*A23L 7/113*(2016.01)i
FI: A23L7/113

According to International Patent Classification (IPC) or to both national classification and IPC

### B. FIELDS SEARCHED

Minimum documentation searched (classification system followed by classification symbols)

A23L7/113

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| Y | WO 2008/081931 A1 (NISSIN FOODS HOLDINGS CO., LTD.) 10 July 2008 (2008-07-10) experiment examples 1, 4, tables 4, 5 | 6-8 |
| A | | 1-5 |
| Y | JP 61-5754 A (AJINOMOTO KK) 11 January 1986 (1986-01-11) p. 1, right column, table 1 | 6–8 |
| A | | 1-5 |
| Y | WO 2011/013185 A1 (NISSIN FOODS HOLDINGS CO., LTD.) 03 February 2011 (2011-02-03) examples 3, 4, table 2 | 6-8 |
| A | JP 2000-245377 A (NISSIN FOOD PRODUCTS LTD) 12 September 2000 (2000-09-12) paragraph [0026], example 12 | 1-8 |
| A | WO 2013/191136 A1 (NISSHIN FOODS INC.) 27 December 2013 (2013-12-27) claims | 1-8 |

☑ Further documents are listed in the continuation of Box C.          ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **11 July 2022** | **19 July 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

International application No.

**PCT/JP2022/019603**

| C. | DOCUMENTS CONSIDERED TO BE RELEVANT | | |
|---|---|---|---|
| Category* | Citation of document, with indication, where appropriate, of the relevant passages | | Relevant to claim No. |
| A | JP 11-196799 A (MYOJO FOOD CO LTD) 27 July 1999 (1999-07-27) claims, examples | | 1-8 |
| A | JP 11-178529 A (SANYO SHOKUHIN KK) 06 July 1999 (1999-07-06) claim 1 | | 1-8 |

Form PCT/ISA/210 (second sheet) (January 2015)

**INTERNATIONAL SEARCH REPORT**
Information on patent family members

International application No.

**PCT/JP2022/019603**

| Patent document cited in search report | | | Publication date (day/month/year) | Patent family member(s) | | | Publication date (day/month/year) |
|---|---|---|---|---|---|---|---|
| WO | 2008/081931 | A1 | 10 July 2008 | US 2010/0323070 experiment 1, 4, tables 4, 5 CN 101686717 RU 2009129134 MY 150501 | A1 A A A | | |
| JP | 61-5754 | A | 11 January 1986 | (Family: none) | | | |
| WO | 2011/013185 | A1 | 03 February 2011 | US 2011/0129582 examples 3, 4, table 2 EP 2460417 CN 102118980 MX 2011000422 KR 10-2011-0081801 TW 201103442 | A1 A1 A A A A | | |
| JP | 2000-245377 | A | 12 September 2000 | (Family: none) | | | |
| WO | 2013/191136 | A1 | 27 December 2013 | US 2015/0086696 claims EP 2862452 AU 2013278442 CA 2872486 CN 104394712 KR 10-2015-0029614 | A1 A1 A A A A | | |
| JP | 11-196799 | A | 27 July 1999 | (Family: none) | | | |
| JP | 11-178529 | A | 06 July 1999 | (Family: none) | | | |

Form PCT/ISA/210 (patent family annex) (January 2015)

**REFERENCES CITED IN THE DESCRIPTION**

**Patent documents cited in the description**

- JP 2018121629 A

- JP 2020202771 A

**Non-patent literature cited in the description**

- Introduction to Instant Noodles. The Japan Food Journal, Co., Ltd, 1998, 52-62